(19) Europäisches Patentamt / European Patent Office / Office européen des brevets

(11) **EP 4 760 822 A1**

(12) **EUROPEAN PATENT APPLICATION**
published in accordance with Art. 153(4) EPC

(43) Date of publication:
**17.06.2026 Bulletin 2026/25**

(21) Application number: **24934858.2**

(22) Date of filing: **02.12.2024**

(51) International Patent Classification (IPC):
**H01M 4/62** $^{(2006.01)}$  **H01M 4/13** $^{(2010.01)}$
**H01M 10/0525** $^{(2010.01)}$

(52) Cooperative Patent Classification (CPC):
Y02E 60/10

(86) International application number:
**PCT/CN2024/136031**

(87) International publication number:
**WO 2025/213794 (16.10.2025 Gazette 2025/42)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.04.2024 CN 202410431163**

(71) Applicant: **Eve Energy Co. Ltd.**
**Huizhou, Guangdong 516000 (CN)**

(72) Inventors:
• **FAN, Hongyang**
  **Huizhou, Guangdong 516000 (CN)**

• **XU, Jianfeng**
  **Huizhou, Guangdong 516000 (CN)**
• **HONG, Sifan**
  **Huizhou, Guangdong 516000 (CN)**
• **LIU, Rongjiang**
  **Huizhou, Guangdong 516000 (CN)**
• **HUANG, Binbin**
  **Huizhou, Guangdong 516000 (CN)**

(74) Representative: **Berggren Oy**
**P.O. Box 16**
**Fabianinkatu 21**
**00101 Helsinki (FI)**

(54) **NEGATIVE ELECTRODE SHEET, AND PREPARATION METHOD THEREFOR AND USE THEREOF**

(57)    A negative electrode plate and a preparation method and application thereof. The negative electrode plate includes a current collector and a composite active material layer disposed on at least one surface of the current collector. The composite active material layer includes a first and a second active material layers disposed sequentially on a surface of the current collector. The second active material layer is disposed on a surface of the first active material layer away from the current collector. The first active material layer includes a first binder. The first binder includes a low-swelling binder. The second active material layer includes a second binder. The second binder includes at least one of a high-swelling binder, an acrylic acid derivative multi-component copolymer. The low-swelling binder has a volume swelling ratio of 25% to 40%, and the high-swelling binder has a volume swelling ratio of 60% to 85%.

FIG. 1

**Description**

**CROSS-REFERENCE TO RELATED APPLICATION**

The present disclosure claims the benefit of priority of Chinese Patent Applications 2024104311639 filled on April 10, 2024, with the China National Intellectual Property Administration, the contents of which are incorporated herein by reference in their entirety.

**TECHNICAL FIELD**

The present disclosure relates to the technical field of lithium batteries, and more particularly, to a negative electrode plate and a preparation method and application thereof.

**BACKGROUND**

Electric vehicles driven by lithium-ion batteries are one of the promising emission-free vehicles to solve the problems of air pollution and energy crisis. In recent years, the application scenarios of lithium-ion batteries have increased and the usage frequency is getting high.

**SUMMARY**

Lithium-ion batteries experience structural expansion and shrinkage during charging and discharging due to deintercalation and intercalation of lithium. On the charging of the lithium-ion battery, a process of lithium intercalation (e.g., graphite negative electrode, hard carbon negative electrode, etc.) or an alloying lithium intercalation (e.g., silicon based negative electrode, lithium metal negative electrode, etc.) occurs at the negative electrode. Therefore, the negative electrode materials generally expand obviously with the increase of lithium intercalation depth. For example, graphite negative electrodes generally expand by 10%-15% in volume, while the silicon based negative electrodes may expand by up to 300% in volume. This will, to some extent, reduce the kinetic performance, cycle performance, and high temperature storage performance of the lithium batteries.

According to a first aspect, the present disclosure provides a negative electrode plate, and the following technical solutions are adopted.

A negative electrode plate, which includes a current collector and a composite active material layer disposed on at least one surface of the current collector. The composite active material layer includes a first active material layer and a second active material layer disposed sequentially on a surface of the current collector. The second active material layer is disposed on a surface of the first active material layer away from the current collector.

The first active material layer includes a first binder. The first binder includes a low-swelling binder. The low-swelling binder includes a low-swelling styrene-butadiene binder. The monomer composition of the low-swelling styrene-butadiene binder includes at least one of butadiene and styrene.

A mass ratio of the first binder in the first active material layer ranges from 1% to 3%.

The second active material layer includes a second binder. The second binder includes at least one of a high-swelling binder, an acrylic acid derivative multi-component copolymer. The high-swelling binder includes at least one of a high-swelling styrene-butadiene binder, a high-swelling styrene-acrylic binder. The monomer composition of the high-swelling styrene-butadiene binder includes at least one of butadiene and styrene. The monomer composition of the high-swelling styrene-acrylic binder includes at least one of styrene and acrylate. The monomer composition of the acrylic acid derivative multi-component copolymer includes at least one of acrylic acid, acrylate salt, acrylic ester, and acrylonitrile.

A mass ratio of the second binder in the second active material layer ranges from 0.8% to 2%.

Herein, the low-swelling binder has a volume swelling ratio ranging from 25% to 40%, and the high-swelling binder has a volume swelling ratio ranging from 60% to 85%.

In a second aspect, the present disclosure provides a method for preparing a negative electrode plate, and the following technical solutions are adopted.

A method for preparing a negative electrode plate including steps as follows:

S1: mixing a first conductive agent, a first dispersant, a first active material, the first binder and a first solvent to obtain a mixture, and stirring the mixture to obtain a first active slurry; mixing a second conductive agent, a second dispersant, a second active material, the second binder and a second solvent to obtain a mixture, and stirring the mixture to obtain a second active slurry;

S2: coating the first active slurry and the second active slurry on at least one surface of the current collector, wherein the first active slurry is coated on the surface of the current collector, dried and cold-pressed to obtain a negative electrode plate.

According to a third aspect, the present disclosure provides a lithium-ion battery, and the following technical solutions are adopted.

A lithium-ion battery includes a positive electrode plate, a separator, an electrolyte, and a negative electrode plate as described above.

BENEFICIAL EFFECTS

Swelling ratio of a low-swelling binder = (mass or volume of the low-swelling binder after swelling in electrolyte - initial mass or volume of the low-swelling binder)/initial mass or volume of the low swelling binder ×100%. Specifically, the volume swelling ratio of a low-swelling binder in the present disclosure = (volume of a low-swelling binder after swelling in electrolyte - initial volume of the low-swelling binder)/initial volume of the low-swelling binder ×100%. The volume swelling ratio of a high-swelling binder in the present disclosure = (volume of the high-swelling binder after swelling in electrolyte - initial volume of the high-swelling binder)/initial volume of the high-swelling binder ×100%.

The low-swelling binder has a low swelling ratio in the electrolyte. By using the low-swelling binder in the first active material layer close to the current collector, during cycling of lithium battery, the low-swelling binder can still maintain good volume stability, can maintain adhesion between the negative electrode active material layer and the current collector, thus preventing the first active material layer from falling off or peeling off from the current collector, thereby improving the cycle stability of the composite active material layer, and further improving the cycling performance of the lithium battery. Moreover, due to the volume stability of the low-swelling binder, the active particles in the active material layer can be tightly packed together during cycling of lithium battery, thus eliminating large gaps between the particles. In this way, electron conduction in the first active material layer is facilitated, thereby improving the rate performance of the lithium battery.

Compared with the low-swelling binder, the high-swelling binder has a relatively high electrolyte absorption property in the electrolyte. By using the high-swelling binder in the second active material layer away from the current collector, the adsorption capacity of the second active material layer for the electrolyte can be increased. While after thoroughly infiltrated by electrolyte, the acrylic acid derivative multi-component copolymer in the second active material layer can react with the solvated ions in the electrolyte to form a uniform and stable solid electrolyte interface (SEI) film. In this way, the direct current resistance (DCR) value of the second active material layer is reduced, which is beneficial to improve the conductivity of the second active material layer, thus alleviating the decrease in the compactness between the active particles caused by the expansion of the high-swelling binder due to the electrolyte absorption, avoiding the occurrence of an increase in the ionic impedance in the second active material layer, and further improving the kinetic performance of the lithium battery. In addition, the adsorption capacity of the second active material layer for the electrolyte is increased, which can also improve the wettability of the electrolyte to the first active material layer close to the current collector to a certain extent. Moreover, since a low-swelling binder is used in the first active material layer, the first active material layer can still maintain good volume stability after being infiltrated by the electrolyte from the second active material layer, thereby improving the ion transport and electron transport performance of the composite active material layer, which is helpful to improve the kinetic performance of the lithium battery.

**BRIEF DESCRIPTION OF THE DRAWINGS**

    FIG. 1 is a schematic structural diagram of a negative electrode plate according to the present disclosure.
    FIG. 2 is a schematic diagram of a binder film of the binder used during the test process of the swelling rate of the binder.

List of reference signs:

1. current collector; 2. composite active material layer; 21. first active material layer; 22. second active material layer.

**DETAILED DESCRIPTION**

In some embodiments, the low-swelling styrene-butadiene binder includes a low-swelling styrene-butadiene rubber. The high-swelling styrene-butadiene binder includes a high-swelling styrene-butadiene rubber. The high-swelling styrene-acrylic binder includes a high-swelling styrene-acrylic rubber. The acrylate salt includes at least one of sodium acrylate and lithium acrylate.

In some embodiments, when the second binder includes both the high-swelling binder and the acrylic acid derivative multi-component copolymer, the mass ratio of the high-swelling binder to the acrylic acid derivative multi-component copolymer is 1: (1.5 to 2.5).

In some embodiments, the composite active material layer has a thickness ranging from 100 $\mu$m to 300 $\mu$m.

In some embodiments, the ratio of the thickness of the first active material layer to the thickness of the second active material layer is (1 to 1.5): 1.

By controlling the ratio of the thickness of the first active material layer to the thickness of the second active material layer to be within the above range, the content of the binder in each active material layer can be reasonably controlled, so that the coordination effect of the first binder and the second binder can reach the best, thereby significantly improving the kinetic performance and the cycling performance of the lithium battery.

Under the condition that the thickness of the composite active material layer remains constant, when the thickness of the first active material layer is excessively thick, although the interfacial adhesion between the first active material layer and the current collector is strong at this time, peeling of the active material layer off from the surface of the current collector will not occur. However, the ability of the electrolyte to enter the portion of the first active material layer close to the current collector decreases. As a result, the ion transfer impedance of the first active material layer is improved, and the specific energy of the first active material layer is reduced to some extent. In addition, at this time, the thickness of the second active material layer is too thin, and the content of the high-swelling binder contained in the second active material layer is unchanged, the proportion of the high-swelling binder in the whole the negative electrode plate is low, and the absorption capacity for the electrolyte is limited, which will not satisfy the kinetics requirement.

Under the condition that the thickness of the composite active material layer remains constant, when the thickness of the first active material layer is too thin, the interfacial adhesion between the first active material layer and the current collector decreases. As a result, the first active material layer is peeled off from the current collector. In addition, at this time, the thickness of the second active material layer is too thick. When the high-swelling binder absorbs the electrolyte, the volume expansion caused by the high-swelling binder will destroy the stability of the second active material layer, which is not conducive to the structural stability of the second active material layer and will inevitably cause a decrease in the cycle stability of the battery cells.

In some embodiments, the first active material layer further includes a first active material. The first active material includes at least one of graphite and silicon-containing graphite. The second active material layer further includes a second active material. The second active material includes at least one of graphite and silicon-containing graphite.

In some embodiments, the mass percentages of the components in the first active material layer are as follows: the first active material accounts for 93.5% to 98.4%, the first conductive agent accounts for 0% to 1.5%, the first dispersant or first thickener accounts for 0.6% to 2%, and the first binder accounts for 1% to 3%.

In some embodiments, the mass percentages of the components in the second active material layer are as follows: the second active material accounts for 93.5% to 98.6%, the second conductive agent accounts for 0% to 1.5%, the second dispersant or second thickener accounts for 0.6% to 2%, and the second binder accounts for 0.8% to 2%.

In some embodiments, the first dispersant and the second dispersant include at least one of sodium carboxymethyl cellulose and lithium carboxymethyl cellulose. The first conductive agent and the second conductive agent include at least one of conductive carbon black, conductive graphite, and carbon nanotubes. The first solvent and the second solvent include water.

In some embodiments, the first active slurry is prepared by using a method including steps as follows:

A1. mixing the first dispersant with water, followed by stirring and dispersing to obtain a first dispersion adhesive solution with a solid content of 1% to 2%;

A2, mixing the first active material, the first conductive agent and 30 wt% to 50 wt% of the first dispersion adhesive solution, followed by stirring and dispersing to obtain a first kneaded slurry;

A3, mixing 50 wt% to 70 wt% of the first dispersion adhesive solution with the first kneaded slurry, followed by stirring and dispersing to obtain a first pretreated slurry; and

A4: mixing the first binder with the first pretreated slurry, followed by stirring and dispersing to obtain the first active slurry.

In some embodiments, the second active slurry is prepared by using a method including steps as follows:

B1, mixing the second dispersant with water, followed by stirring and dispersing to obtain a dispersion adhesive solution with a solid content of 1% to 2%;

B2, mixing the second active material, the second conductive agent and 30 wt% to 50 wt% of the second dispersion adhesive solution, followed by stirring and dispersing to obtain a second kneaded slurry;

B3, mixing 50 wt% to 70 wt% of the second dispersion adhesive solution with the second kneaded slurry, followed by stirring and dispersing to obtain a second pretreated slurry; and

B4: mixing the second binder with the second pretreated slurry, followed by stirring and dispersing to obtain the second active slurry.

In some embodiments, when the second binder includes both a high-swelling binder and an acrylic acid derivative multi-component copolymer, the steps of B3 and B4 are specifically as follows:

B3, mixing 50 wt% to 70 wt% of the second dispersion adhesive solution and the second kneaded slurry with the acrylic acid derivative multi-component copolymer, followed by stirring and dispersing to obtain a second pretreated slurry; and

B4: mixing the high-swelling binder with the second pretreated slurry, followed by stirring and dispersing to obtain the second active slurry.

In some embodiments, t1 represents a mass of the first active slurry, t2 represents a mass of the second active slurry, m1 represents a mass of the first binder, m2 represents a mass of the second binder, and the first binder and the second binder satisfy m1/(t1+t2) >m2/(t1+t2). In the present disclosure, since the slurry is prepared by layers and then coated, during the subsequent drying process, the first binder located in the first active slurry close to the current collector section may float up, which will lead to poor adhesion between the first active material layer close to the current collector and the current collector, thus affecting the cycling performance of the lithium batteries. While by controlling the content of the first binder to be higher than the content of the second binder, the situation that the adhesion between the composite active material layer and the current collector becomes worse due to the floating up of the first binder can be alleviated, thereby improving the cycle performance of the lithium batteries.

In some embodiments, m1 represents the mass of the first binder, and m2 represents the mass of the second binder, m1 and m2 satisfy a formula as follows: $5\% \leq (m1-m2)/m2 \times 100\% \leq 50\%$.

By controlling the contents of the first binder and the second binder to be within the above-mentioned range, it is possible to avoid the situation that a large amount of the first binder floats up into the second active material layer during the drying process due to the excessive content of the first binder, and the low-swelling binder will affect the adsorption capacity of the second active material layer for the electrolyte.

Embodiment 1

1. Preparation of a negative electrode plate

Preparation of a first active slurry:

Graphite particles, conductive carbon black, lithium carboxymethyl cellulose, a low-swelling styrene-butadiene binder (low-swelling styrene-butadiene rubber) are weight in a mass ratio of 93.9%: 1.5%: 2%: 2.6%.

A1. Mixing the lithium carboxymethyl cellulose with water, followed by stirring at a rotation speed of 20 rpm, and dispersing at 2000 rpm for 3 h to obtain a first dispersion adhesive solution with a solid content of 1% to 2%;

A2, mixing the graphite particles, the conductive carbon black, and 40 wt% of the first dispersion adhesive solution, followed by stirring at a rotation speed of 15 rpm, and dispersing at 1000 rpm for 1 h to obtain a first kneaded slurry;

A3, mixing 60 wt% of the first dispersion adhesive solution with the first kneaded slurry, followed by stirring at a rotation speed of 20 rpm, and dispersing at 2000 rpm for 2 h to obtain a first pretreated slurry (with a fineness of less than and equal to 30 $\mu$m, and a viscosity ranging from 1500 mpa.s to 4500 mpa.s); and

A4: mixing the low-swelling binder (low-swelling styrene-butadiene rubber with a volume swelling ratio of 35%) with the first pretreated slurry, followed by stirring at a rotation speed of 20 rpm and dispersing at 700 rpm for 0.8 h to obtain the first active slurry.

Preparation of a second active slurry:

Graphite particles, conductive carbon black, sodium carboxymethyl cellulose, and a second binder are weight in a mass ratio of 94.5%: 1.5%: 2%: 2%, wherein the second binder includes a high-swelling styrene-butadiene binder (high-swelling styrene-butadiene rubber) and an acrylic acid derivative multi-component copolymer (whose monomer composition contains acrylic acid) in a mass ratio of 1:2.

B1: Mixing the sodium carboxymethyl cellulose with water, followed by stirring at a rotation speed of 20rpm, and dispersing at 2000 rpm for 3 h to obtain a second dispersion adhesive solution with a solid content of 1% to 2%;

B2: mixing the graphite particles, the conductive carbon black, and 40 wt% of the second dispersion adhesive solution, followed by stirring at a rotation speed of 15 rpm, and dispersing at 1000 rpm for 1 h to obtain a second kneaded slurry;

B3: mixing 60 wt% of the second dispersion adhesive solution and the acrylic acid derivative multi-component copolymer with the second kneaded slurry, followed by stirring at a rotation speed of 20 rpm, and dispersing at 2000 rpm for 2 h to obtain a second pretreated slurry (with a fineness of less than and equal to 30 $\mu$m, and a viscosity ranging from 1500 mpa.s to 4500mpa.s); and

B4: mixing the high-swelling styrene-butadiene binder (high-swelling styrene-butadiene rubber with a volume swelling ratio of 70%) with the second pretreated slurry, followed by stirring at a rotation speed of 20 rpm, and dispersing at 700 rpm 0.8 h to obtain the second active slurry.

The first binder and the second binder satisfy a formula as follows: $(m1-m2)/m2 \times 100\% = 30\%$.

The first active slurry and the second active slurry were simultaneously coated on one surface of the copper foil by using a double-layer coater. After drying, the above-mentioned coating operation is repeated on the other surface of the copper foil, and the negative electrode plate was obtained by drying, cold pressing and slitting.

2. Preparation of a positive electrode plate

Preparation of a positive electrode slurry is as follows: mixing NCA (lithium nickel cobalt aluminum oxide) positive electrode active material, a conductive agent acetylene black, and a binder PVDF (polyvinylidene fluoride) in a mass ratio of 97.9%: 0.9%: 1.2% in a vacuum mixer to obtain a mixed slurry, and then adding a solvent NMP (N-methylpyrrolidone) to the mixed slurry, followed by stirring the mixed slurry to a uniform state under the action of the vacuum mixer, thereby obtaining the positive electrode slurry of this example. The positive electrode slurry is uniformly coated on both surfaces of aluminum foil of the positive electrode current collector, dried at room temperature, and transferred to an oven for further drying, then a semi-finished positive electrode plate was obtained after drying in the oven. The semi-finished positive electrode plate is subjected to cold pressing and slitting to obtain the positive electrode plate to be assembled.

3. Assembly of lithium-ion batteries

A commercially available polyethylene film is used as a separator for a lithium-ion battery. The adopted electrolyte is a commercially available electrolyte suitable for a 4.2 V (upper limit of the charge) voltage system battery. The positive electrode plate, the negative electrode plate and the separator are wound together to obtain a bare battery cell. The bare battery cell is subjected to operations of encapsulation, liquid injection, static placement, chemical formation, and capacity separation to obtain a finished battery.

In the negative electrode plate of this embodiment, the thickness of the first active material layer is 100 $\mu$m; and the thickness of the second active material layer was 100 $\mu$m.

Embodiment 2

1. Preparation of a negative electrode plate

Preparation of a first active slurry:

Graphite particles, conductive carbon black, sodium carboxymethyl cellulose, a low-swelling styrene-butadiene binder (low-swelling styrene-butadiene rubber) are weight in a mass ratio of 96.3%: 0.7%: 1.5%: 1.5%.

A1: Mixing the sodium carboxymethyl cellulose and lithium carboxymethylcellulose with water, followed by stirring at a rotation speed of 30 rpm, and dispersing at 3000 rpm for 1.5 h, to obtain a first dispersion adhesive solution with a solid content of 1% to 2%;

A2: mixing the graphite particles, the conductive carbon black, and 50 wt% of the first dispersion adhesive solution, followed by stirring at a rotation speed of 25 rpm, and dispersing at 1500 rpm for 0.5 h to obtain a first kneaded slurry;

A3: mixing 50 wt% of the first dispersion adhesive solution with the first kneaded slurry, followed by stirring at a rotation speed of 30 rpm, and dispersing at 3000 rpm for 1 h to obtain a first pretreated slurry (with a fineness of less than and equal to 30 $\mu$m, and a viscosity ranging from 1500 mpa.s to 4500 mpa.s); and

A4: mixing the low-swelling binder (low-swelling styrene-butadiene rubber with a volume swelling ratio of 25%) with the first pretreated slurry, followed by stirring at a rotation speed of 25 rpm and dispersing at 1000 rpm for 0.5 h to obtain the first active slurry.

Preparation of a second active slurry:

Graphite particles, conductive carbon black, sodium carboxymethyl cellulose, and a second binder are weight in a mass ratio of 97%: 0.8%: 1.2%: 1, wherein the second binder includes a high-swelling styrene-butadiene binder (high-swelling styrene-butadiene rubber) and an acrylic acid derivative multi-component copolymer (whose monomer composition contains lithium acrylate) in a mass ratio of 1:1.5.

B1: Mixing the sodium carboxymethyl cellulose with water, followed by stirring at a rotation speed of 30 rpm, and dispersing at 3000 rpm for 1.5 h to obtain a second dispersion adhesive solution with a solid content of 1% to 2%;

B2: mixing the graphite particles, the conductive carbon black, and 50 wt% of the second dispersion adhesive solution, followed by stirring at a rotation speed of 25 rpm and dispersing at 1500 rpm for 0.5 h to obtain a second kneaded slurry;

B3: mixing 50 wt% of the second dispersion adhesive solution and the acrylic acid derivative multi-component copolymer (with a volume swelling ratio of 80%) with the second kneaded slurry, followed by stirring at a rotation speed of 30 rpm, and dispersing at 3000 rpm for 1 h to obtain a second pretreated slurry (with a fineness of less than and equal to 30 $\mu$m, and a viscosity ranging from 1500 mpa.s to 4500 mpa.s); and

B4: mixing the high-swelling styrene-butadiene binder (high-swelling styrene-butadiene rubber with a volume swelling ratio of 85%) with the second pretreated slurry, followed by stirring at 25 rpm, and dispersing at 1000 rpm for 0.5 h to obtain the second active slurry.

The first binder and the second binder satisfy a formula as follows: (m1-m2)/m2×100%=50%.

The first active slurry and the second active slurry were simultaneously coated on one surface of the copper foil by using a double-layer coater. After drying, the above-mentioned coating operation is repeated on the other surface of the copper foil, and the negative electrode plate was obtained by drying, cold pressing and slitting.

In the negative electrode plate of this embodiment, the thickness of the first active material layer is 150 $\mu$m; and the thickness of the second active material layer is 150 $\mu$m.

Embodiment 3

1. Preparation of a negative electrode plate

Preparation of a first active slurry:

Silicon-doped graphite particles, carbon nanotubes, lithium carboxymethyl cellulose, a low-swelling styrene-butadiene binder (low-swelling styrene-butadiene rubber) are weight in a mass ratio of 98.1%: 0.2%: 0.6%: 1.1%.

A1: Mixing the lithium carboxymethyl cellulose with water, followed by stirring at a rotation speed of 15 rpm, and dispersing at 1500 rpm for 6 h, to obtain a first dispersion adhesive solution with a solid content of 1% to 2%;

A2: mixing the silicon-doped graphite particles, the carbon nanotubes, 30 wt% of the first dispersion adhesive solution, followed by stirring at a rotation speed of 10 rpm, and dispersing at 500 rpm for 2 h to obtain a first kneaded slurry;

A3: mixing 70 wt% of the first dispersion adhesive solution with the first kneaded slurry, followed by stirring at a rotation speed of 15 rpm, and dispersing at 1500 rpm for 3 h to obtain a first pretreated slurry (with a fineness of less than and equal to 30 $\mu$m, and a viscosity ranging from 1500 mpa.s to 4500 mpa.s);

A4: mixing the low-swelling binder (low-swelling styrene-butadiene rubber with a volume swelling ratio of 40%) with the first pretreated slurry, followed by stirring at a rotation speed of 15 rpm and dispersing at 400 rpm for 1 h to obtain the first active slurry.

Preparation of a second active slurry:

Silicon-doped graphite particles, carbon nanotubes, lithium carboxymethyl cellulose, and a second binder in a mass ratio of 98.2%: 0.2%: 0.6%: 1. The second binder includes a high-swelling styrene-acrylic binder (high-swelling styrene-acrylic rubber) and an acrylic acid derivative multi-component copolymer (whose monomer composition contains sodium acrylate) in a mass ratio of 1:2.5.

B1: Mixing the lithium carboxymethyl cellulose with water, followed by stirring at a rotation speed of 15 rpm, and dispersing at 1500 rpm for 6 h to obtain a second dispersion adhesive solution with a solid content of 1% to 2%;

B2: mixing the silicon-doped graphite particles, carbon nanotubes, and 30 wt% of the second dispersion adhesive solution, followed by stirring at a rotation speed of 10 rpm, and dispersing at 500 rpm for 2 h to obtain a second kneaded slurry;

B3: mixing 70 wt% of the second dispersion adhesive solution and the acrylic acid derivative multi-component copolymer (with a volume swelling rate of 65%) with the second kneaded slurry, followed by stirring at a rotation speed of 15 rpm and dispersing at 1500 rpm for 3 h, to obtain a second pretreated slurry (with a fineness of less than and equal to 30 μm, and a viscosity ranging from 1500 mpa.s to 4500 mpa.s); and

B4: mixing the high-swelling styrene-acrylic binder (high-swelling styrene-acrylic rubber with a swelling rate of 60%) with the second pretreated slurry, followed by stirring at a rotation speed of 15 rpm, and dispersing at 400 rpm for 1 h, to obtain the second active slurry.

The first binder and the second binder satisfy a formula as follows: (m1-m2)/m2×100%=10%.

The first active slurry and the second active slurry were simultaneously coated on one surface of the copper foil by using a double-layer coater. After drying, the above-mentioned coating operation is repeated on the other surface of the copper foil, and the negative electrode plate was obtained by drying, cold pressing and slitting.

In the negative electrode plate of this embodiment, the thickness of the first active material layer is 50 μm; and the thickness of the second active material layer is 50 μm.

Embodiment 4

1. Preparation of a negative electrode plate

Preparation of a first active slurry:

Graphite particles, conductive carbon black, lithium carboxymethyl cellulose, and a low-swelling styrene-butadiene binder (low-swelling styrene-butadiene rubber) are weight in a mass ratio of 97.5%: 0.05%: 0.75%: 1.7%.

A1: Mixing the sodium carboxymethyl cellulose with water, followed by stirring at a rotation speed of 20 rpm, and dispersing at 2000 rpm for 3 h, to obtain a first dispersion adhesive solution with a solid content of 1% to 2%;

A2: mixing the graphite particles, the conductive carbon black, and 40 wt% of the first dispersion adhesive solution, followed by stirring at a rotation speed of 15 rpm, and dispersing at 1000 rpm for 1 h to obtain a first kneaded slurry;

A3: mixing 60 wt% of the first dispersion adhesive solution with the first kneaded slurry, followed by stirring at a rotation speed of 20 rpm, and dispersing at 2000 rpm for 2 h, to obtain a first pretreated slurry (with a fineness of less than and equal to 30 μm, and a viscosity ranging from 1500 mpa.s to 4500mpa.s); and

A4: mixing the low-swelling binder (low-swelling styrene-butadiene rubber with a volume swelling ratio of 35%) with the first pretreated slurry, followed by stirring at a rotation speed of 20 rpm and dispersing at 700 rpm for 0.8 h to obtain the first active slurry.

Preparation of a second active slurry:

Graphite particles, conductive carbon black, lithium carboxymethyl cellulose, and a high-swelling styrene-acrylic binder (high-swelling styrene-acrylic rubber) in a mass ratio of 97.5%: 0.05%: 0.75%: 1.7%.

B1. Mixing the sodium carboxymethyl cellulose with water, followed by stirring at a rotation speed of 20 rpm, and dispersing at 2000 rpm for 3 h to obtain a second dispersion adhesive solution with a solid content of 1% to 2%;

B2, mixing the graphite particles, the conductive carbon black, and 40 wt% of the second dispersion adhesive solution, followed by stirring at a rotation speed of 15 rpm, and dispersing at 1000 rpm for 1 h to obtain a second kneaded slurry;

B3: mixing 60 wt% of the second dispersion adhesive solution with the second kneaded slurry, followed by stirring at a rotation speed of 20 rpm, and dispersing at 2000 rpm for 2 h, to obtain a second pretreated slurry (with a fineness of less than and equal to 30 μm, and a viscosity ranging from 1500 mpa.s to 4500 mpa.s); and

B4: mixing the high-swelling styrene-acrylic binder (high-swelling styrene-acrylic rubber with a volume swelling rate of 70%) with the second pretreated slurry, followed by stirring at a rotation speed of 20 rpm, and dispersing at 700 rpm for 0.8h, to obtain the second active slurry.

The first binder and the second binder satisfy a formula as follows: (m1-m2)/m2×100%=50%.

The first active slurry and the second active slurry were simultaneously coated on one surface of the copper foil by using a double-layer coater. After drying, the above-mentioned coating operation is repeated on the other surface of the copper foil, and the negative electrode plate was obtained by drying, cold pressing and slitting.

In the negative electrode plate of this embodiment, the thickness of the first active material layer is 60 μm; and the thickness of the second active material layer is 60 μm.

Embodiment 5

1. Preparation of a negative electrode plate

Preparation of a first active slurry:

Silicon-doped graphite particles, carbon nanotubes, lithium carboxymethyl cellulose, and a low-swelling styrene-butadiene binder (low-swelling styrene-butadiene rubber) are weight in a mass ratio of 96.8%: 0.3%: 0.9%: 2%.

A1. Mixing the lithium carboxymethyl cellulose with water, followed by stirring at a rotation speed of 15 rpm, and dispersing at 1500 rpm for 6 h, to obtain a first dispersion adhesive solution with a solid content of 1% to 2%;
A2, mixing the silicon-doped graphite particles, the carbon nanotubes, 30 wt% of the first dispersion adhesive solution, followed by stirring at a rotation speed of 10 rpm, and dispersing at 500rpm for 2 h to obtain a first kneaded slurry;
A3, mixing 70 wt% of the first dispersion adhesive solution with the first kneaded slurry, followed by stirring at 15 rpm and dispersing at 1500 rpm for 3 h to obtain a first pretreated slurry (with a fineness of less than and equal to 30 $\mu$m, and a viscosity ranging from 1500 mpa.s to 4500 mpa.s); and
A4: mixing the low-swelling binder (low-swelling styrene-butadiene rubber with a volume swelling ratio of 35%) with the first pretreated slurry, followed by stirring at a rotation speed of 15 rpm, and dispersing at 400 rpm for 1 h to obtain the first active slurry.

Preparation of a second active slurry:

Silicon-doped graphite particles, carbon nanotubes, lithium carboxymethyl cellulose, and an acrylic acid derivative multi-component copolymer (whose monomer composition contains acrylic ester) in a mass ratio of 96.8%: 0.3%: 0.9%: 2%.

B1. Mixing the lithium carboxymethyl cellulose with water, followed by stirring at a rotation speed of 15 rpm, and dispersing at 1500 rpm for 6 h to obtain a second dispersion adhesive solution with a solid content of 1% to 2%;
B2: mixing the silicon-doped graphite particles, carbon nanotubes, and 30 wt% of the second dispersion adhesive solution, followed by stirring at a rotation speed of 10 rpm, and dispersing at 500 rpm for 2 h to obtain a second kneaded slurry;
B3: mixing 70 wt% of the second dispersion adhesive solution with the second kneaded slurry, followed by stirring at a rotation speed of 15 rpm and dispersing at 1500 rpm for 3 h, to obtain a second pretreated slurry (with a fineness of less than and equal to 30 $\mu$m, and a viscosity ranging from 1500 mpa.s to 4500 mpa.s); and
B4: mixing the acrylic acid derivative multi-component copolymer (with a volume swelling ratio of 75%) with the second pretreated slurry, followed by stirring at a rotation speed of 15 rpm and dispersing at 400 rpm for 1 h to obtain the second active slurry.

The first binder and the second binder satisfy a formula as follows: (m1-m2)/m2×100%=20%.
The first active slurry and the second active slurry were simultaneously coated on one surface of the copper foil by using a double-layer coater. After drying, the above-mentioned coating operation is repeated on the other surface of the copper foil, and the negative electrode plate was obtained by drying, cold pressing and slitting.
In the negative electrode plate of this embodiment, the thickness of the first active material layer is 120 $\mu$m; and the thickness of the second active material layer is 100 $\mu$m.

Embodiment 6

This embodiment differs from embodiment 1 in that the thickness of the composite active material layer is 400 $\mu$m; and the remaining contents are consistent with those of the embodiment 1.

Embodiment 7

This embodiment differs from embodiment 1 in that the ratio of the thickness of the first active material layer to the second active material layer is 1:0.5; and the remaining contents are consistent with those of the embodiment 1.

Embodiment 8

This embodiment differs from embodiment 1 in that the ratio of the thickness of the first active material layer to the second active material layer is 1: 2; and the remaining contents are consistent with those of the embodiment 1.

Embodiment 9

This embodiment differs from embodiment 1 in that the mass (m1) of the first binder and the mass (m2) of the second binder satisfy (m1-m2)/m2×100%=1% during the preparation of the first active slurry and the second active slurry; and the remaining contents are consistent with those of the embodiment 1.

Embodiment 10

This embodiment differs from embodiment 1 in that the mass (m1) of the first binder and the mass (m2) of the second binder satisfy (m1-m2)/m2×100%=60% during the preparation of the first active slurry and the second active slurry; and the remaining contents are consistent with those of the embodiment 1.

Comparative Example 1

This comparative example differs from embodiment 1 in that in this comparative example, both the first active material layer and the second active material layer include a low-swelling styrene-butadiene rubber.
Specifically, an equal weight (herein "equal weight" refers to the weight after conversion of the solid content) of the low-swelling styrene-butadiene rubber is used to replace the high-swelling styrene-butadiene rubber used in the second active slurry. The remaining contents are consistent with those of the embodiment 1.

Comparative Example 2

This comparative example differs from embodiment 1 in that in this comparative example, both the first active material layer and the second active material layer include a high-swelling styrene-butadiene rubber.
Specifically, an equal weight of the high-swelling styrene-butadiene rubber is used to replace the low-swelling styrene-butadiene rubber used in the first active slurry. The remaining contents are consistent with those of the embodiment 1.

Comparative Example 3

This comparative example differs from embodiment 1 in that in this comparative example, the binder used in the first active material layer and the second active material layer is a mixed binder material obtained by mixing a low-swelling styrene-butadiene binder and a high-swelling styrene-butadiene binder in a mass ratio of 1:1.
Specifically, during the preparation of the first active slurry, the above-mentioned mixed binder material is used to replace the low-swelling styrene-butadiene binder in embodiment 1. During the preparation of the second active slurry, the above-mentioned mixed binder material is used to replace the high-swelling styrene-butadiene binder in embodiment 1. The remaining contents are consistent with those of the embodiment 1.

Comparative Example 4

This comparative example differs from embodiment 1 in that the volume swelling ratio of the styrene-butadiene binder in the first active material layer is 20%, and the volume swelling ratio of the styrene-butadiene binder in the second active material layer is 100%. The remaining contents are consistent with those of the embodiment 1.

Comparative Example 5

This comparative example differs from embodiment 1 in that the volume swelling ratio of the styrene-butadiene binder in the first active material layer is 50%, and the volume swelling ratio of the styrene-butadiene binder in the second active material layer is 55%. The remaining contents are consistent with those of the embodiment 1.

Comparative Example 6

This comparative example differs from embodiment 1 in that the second active material layer in the negative electrode plate is disposed on the surface of the copper foil, the first active material layer is disposed on the surface of the second active material layer away from the copper foil, and the first binder and the second binder satisfy (m2-m1)/m1×100%=20%. The remaining contents are consistent with those of the embodiment 1.

Test method

I. Measurement of volume swelling ratio of the high-swelling binder and the low-swelling binder

Taking the low-swelling styrene-butadiene binder (low-swelling styrene-butadiene rubber) as an example, the swelling ratio of the low-swelling styrene-butadiene rubber (SBR) in the above embodiments and comparative examples is tested, and the specific test steps are as follows:

(1) Taking and placing a certain volume (10 to 30 mL) of SBR emulsion in a container for film forming (a plastic container with a bottom diameter of 8 cm and a groove height of 1 cm is used in the present disclosure), wherein the amount of the SBR emulsion can be appropriately adjusted according to the size of the bottom area of the container. The principle of selecting the plastic container is that the SBR does not adhere to the bottom of the container after the film is dried, making it easy to peel off the film.

(2) Placing the container containing the SBR emulsion on a horizontal table and naturally drying in air for 48 h to 96 h to form a film, or horizontally placing the container in an oven for 12 h to 48 h to form a film, wherein the temperature of oven is set to range from 35°C to 50°C.

(3) After the SBR film is formed, taking it out of the container, and then placing it in an oven at 50°C to 80°C to continue baking 2 h to 5 h, so that moisture in the SBR film is completely dried.

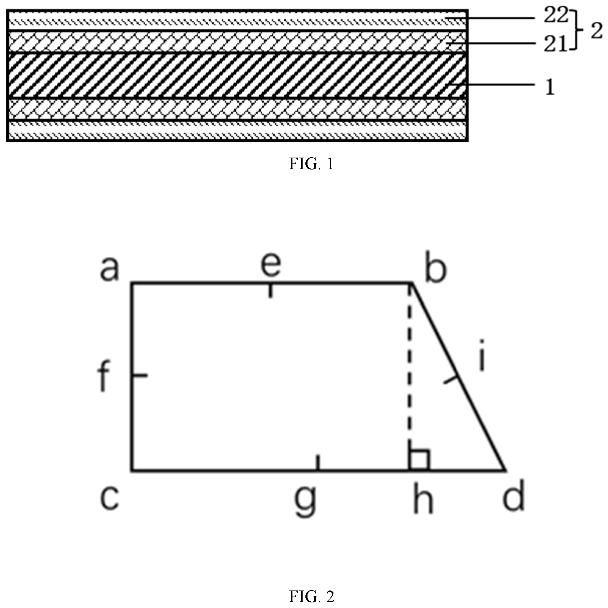

(4) Cutting the SBR film into three right-angled trapezoid shapes with the same or different sizes according to the shape (right-angled trapezoid, or other non-isosceles trapezoids) of FIG. 2 by using a cutting knife or a small knife or scissors as objects in the swelling experiment, and the sizes are adjusted appropriately according to the sizes of the prepared SBR film.

(5) As shown in FIG. 2, the planar dimensions of the films marked as 1, 2, and 3 are measured by using a size-measure instrument or a profile measuring instrument with a sensor or laser: $o_1$, $o_2$, and $o_3$ represent the upper bottoms ab of the trapezoids; $p_1$, $p_2$, and $p_3$ represent the lower bottoms cd of the trapezoids; $q_1$, $q_2$, and $q_3$ represent the heights ac of the trapezoids; and $r_1$, $r_2$, and $r_3$ represent the heights bh of the trapezoids.

(6) As shown in FIG. 2, the thicknesses of the film at different positions of the films marked as 1, 2, and 3 are measured by a measuring instrument: $j_1$, $j_2$, and $j_3$ represent the thicknessed at positions of point a; $k_1$, $k_2$, and $k_3$ represent the thicknesses at positions of point b; $u_1$, $u_2$, and $u_3$ represent the thicknesses at positions of point c; $l_1$, $l_2$, and $l_3$ represent the thicknesses at positions of point of d; $w_1$, $w_2$, and $w_3$ represent the thicknesses at the midpoints e of ab; $x_1$, $x_2$, and $x_3$ represent the thicknesses at the midpoints f of ac; $y_1$, $y_2$, and $y_3$ represent the thicknesses at the midpoints g of cd; and $z_1$, $z_2$, and $z_3$ represent the thicknesses at the midpoints i of bd.

(7) Placing the three samples in a glass or aluminum bottle with a capacity of 10 mL to 50 mL (if the three samples have the same size, they need to be placed in three sample bottles respectively, and if the sizes are different, they can be placed in one same sample bottle), then filling the container with electrolyte for lithium-ion batteries, and sealing. The electrolyte includes at least one solvent such as ethylene carbonate, propylene carbonate, dimethyl carbonate, diethyl carbonate, ethyl methyl carbonate, and propyl propionate.

(8) Baking a glass bottle or an aluminum bottle sealed with a sample and electrolyte is placed in an oven at a baking temperature ranging from 60°C to 80°C for 1 day to 7 days. The baking time is adjusted according to the temperature, so that the baking time is shorter when the temperature is higher.

(9) After soaking the SBR film at high-temperature, and transferring it to room temperature for cooling, then taking it out, and wiping the electrolyte on the surface of the SBR film by using with a dust-free paper.

(10) As shown in FIG. 2, the planar dimensions of the films marked as 1, 2, and 3 before soaking are measured by using a measuring instrument: $O_1$, $O_2$, and $O_3$ represent the upper bottoms ab of the trapezoids; $P_1$, $P_2$, and $P_3$ represent the lower bottoms cd of the trapezoids; $Q_1$, $Q_2$, and $Q_3$ represent the heights ac of the trapezoids; and $R_1$, $R_2$, and $R_3$ represent the height bh of the trapezoids.

(11) As shown in FIG. 2, the thicknesses of the films marked as 1, 2, and 3 at different positions before soaking are measured by a measuring instrument: $J_1$, $J_2$, and $J_3$ represent the thicknesses at positions of points a; $K_1$, $K_2$, and $K_3$ represent the thicknesses at positions of points b; $U_1$, $U_2$, and $U_3$ represent the thicknesses at positions of points c; $L_1$, $L_2$, and $L_3$ represent the thicknesses at positions of points d; $W_1$, $W_2$, and $W_3$ represent the thicknesses at the midpoints e of ab, $X_1$, $X_2$, and $X_3$ represent the thicknesses at the midpoints f of ac; $Y_1$, $Y_2$, $Y_3$ represent the thicknesses at the midpoints g of cd; and $Z_1$, $Z_2$, and $Z_3$ represent the thicknesses at the midpoints i of bd.

(12) Bottom area of SBR film before soaking: $S = (o+p) \times (q+r)/4$,

thickness of the SBR film before soaking: $T = (j+k+u+l+w+x+y+z)/8$,
volume of SBR film before soaking: $V = s \times t$,
bottom area of SBR film after soaking: $S = (O+P) \times (Q+R)/4$,
thickness of the SBR film after soaking: $T = (J+K+U+L+W+X+Y+Z)/8$,

volume of SBR film after soaking: $V = S \times T$,
volume swelling ratio of SBR $\eta = (V-v)/v \times 100\%$.

Test of rate performance

Rate performance of the lithium batteries in the above embodiments and comparative examples are tested. The specific test steps are as follows: at 25 °C., the batteries are charged at a constant current of 3 C to 4.25V, then discharged at 3 C to 2.80 V. The discharge capacity is recorded as C2. 3 C rate discharge retention rate = $C2/C1 \times 100\%$.

III. Cycle performance test

The cycle performance of the lithium batteries in the above embodiments and comparative examples is tested. The specific test steps are as follows: at 25 °C., the batteries are charged and discharged at a rate of 1C/1C under the condition of a voltage ranging from 2.5 V to 4.3 V. The capacity retention rate is recorded when the number of times of cycling is 500.

4. Test of high-temperature storage performance

The high-temperature storage performance of the lithium batteries in the above embodiments and comparative examples is tested. The specific test steps are as follows:

(1) Firstly, the lithium batteries are left to stand for 30 min at 25°C., then the batteries are charged at a constant current of 0.5 C until the voltage reaches 4.2 V. Subsequently, the batteries are charged at a constant voltage until the current is 0.5 C, and then the batteries are discharged at a constant current of 0.5 C until the voltage reaches 1.5 V, and the discharge capacity at this time is recorded as C0S.
(2) The lithium batteries are then left to store for 30 days at 60°C., at the end of the 30-day storage, and the batteries are discharged at a constant current of 0.5 C until the voltage reaches 1.5 V, then the batteries are charged at a constant current of 0.5 C until the voltage reaches 4.2 V. Subsequently, the batteries are charged at a constant voltage of 4.2 V until the current is 0.5 C, and the batteries are discharged at a constant current of 0.5 C until the voltage reaches 1.5 V, and the discharge capacity at this time is recorded as C30S.

Storage capacity recovery rate (%) at the end of the 30-day storage $= C30S/C0S \times 100\%$.

Table 1

| Number | 3 C rate discharge retention rate/% | Capacity retention rate after 500 cycles/% | Storage at 60°C. for 30 days |
|---|---|---|---|
| | | | Capacity recovery rate/% |
| Embodiment 1 | 94.5 | 84.0 | 92.0 |
| Embodiment 2 | 94.1 | 82.5 | 91.2 |
| Embodiment 3 | 93.5 | 83.2 | 91.6 |
| Embodiment 4 | 92.7 | 83.0 | 90.5 |
| Embodiment 5 | 93.2 | 83.5 | 91.8 |
| Embodiment 6 | 92.3 | 82.0 | 91.5 |
| Embodiment 7 | 92.5 | 84.1 | 91.8 |
| Embodiment 8 | 94.8 | 82.1 | 90.2 |
| Embodiment 9 | 92.3 | 78.8 | 89.0 |
| Embodiment 10 | 91.9 | 77.5 | 88.5 |
| Comparative Example 1 | 88.0 | 75.0 | 90.0 |
| Comparative Example 2 | 93.5 | 73.2 | 87.1 |
| Comparative Example 3 | 91.2 | 74.7 | 87.4 |

(continued)

| Number | 3 C rate discharge retention rate/% | Capacity retention rate after 500 cycles/% | Storage at 60°C. for 30 days |
|---|---|---|---|
| | | | Capacity recovery rate/% |
| Comparative Example 4 | 91.8 | 74.4 | 87.6 |
| Comparative Example 5 | 91.6 | 76.5 | 88.0 |
| Comparative Example 6 | 86.5 | 71.5 | 85.5 |

Combining embodiments 1 to 3, comparative examples 1 to 4, and table 1, it can be seen that by applying a low-swelling binder in a first active material layer close to a current collector and a high-swelling binder and/or an acrylic acid derivative multi-component copolymer in a second active material layer away from the current collector, the low-swelling binder can be combined with the high-swelling binder and/or acrylic acid derivative multi-component copolymer, so that the lithium-ion batteries have excellent kinetic performance, cycle performance, and high-temperature storage performance.

When only the low-swelling binder is used (comparative example 1), the kinetic performance of the lithium batteries is significantly reduced; when only the high-swelling binder (comparative example 2) is used, since the swelling ratio of the high-swelling binder in the electrolyte is large, the thickness expansion of the battery cells is greater, and the cycle performance and high-temperature storage performance of the lithium batteries are significantly deteriorated; when the low-swelling binder and the high-swelling binder are mixed (comparative example 3), the kinetic performance and the cycle stability of the lithium batteries are decreased, and the coordination effect of the low-swelling binder and the high-swelling binder is not significant.

When the volume swelling ratio of the low-swelling binder in the first active material layer is too low and the volume swelling ratio of the high-swelling binder in the second active material layer is too high, the volume swelling ratio of the high-swelling binder will affect the compactness of the active particles in the second active material layer, thus improving the ion transfer impedance. Further, the second active material layer, affected by the high-swelling binder, the adsorption capacity of the second active material layer for the electrolyte can be increased. However, the electrolyte cannot be absorbed promptly by the first active material layer close to the current collector. In this way, the instability of the second active material layer is further exacerbated, and the kinetic performance of the lithium batteries is significantly reduced. However, when the volume swelling ratio of the low-swelling binder in the first active material layer is too high, and the volume swelling ratio of the high-swelling binder in the second active material layer is too low, the bonding strength between the first active material layer and the current collector decreases, and the adsorption capacity of the second active material layer for the electrolyte decreases, which will be unfavorable for the adsorption of the first active material layer close to the current collector for the electrolyte, thus reducing the kinetic performance and energy density of the lithium batteries.

When the positions of the first active material layer and the second active material layer are exchanged (comparative example 6), since the liquid absorption and the liquid retention of the electrolyte by the low-swelling binder decrease, which will be unfavorable for the second active material layer to be infiltrated by the electrolyte, not to mention the first active material layer away from the electrolyte, thereby reducing the electron transmission and ion transmission in the composite active material layer. However, the high-swelling binder has poor volume stability, which will affect the adhesion between the first active material layer and the interface of the current collector. The above arrangement of the first active material layer and the second active material layer will significantly reduce the kinetic performance, the cycle performance and the high-temperature cycling performance of the lithium batteries.

Combining embodiments 1, 4 to 5, and table 1, it can be seen that when the binder in the second active material layer is only a high-swelling binder or only an acrylic acid derivative multi-component copolymer, the kinetic performance and the energy density of the lithium batteries are slightly decreased, which may be due to the fact that although the high-swelling binder can improve the infiltration degree of the second active material layer and the first active material layer through their high adsorption for the electrolyte. However, the volume expansion of the high-swelling binder in the second active material layer is greater than the volume expansion of the low-swelling binder in the first active material layer, which will affect the ion transfer impedance of the second active material layer to some extent. However, when only the acrylic acid derivative multi-component copolymer is used, although the acrylic acid derivative multi-component copolymer can reduce the DCR value of the second active material layer, the infiltration degree of part of the first active material layer close to the current collector for the electrolyte at this time is low, which affects not only the ion transfer impedance, but also the energy density of the lithium batteries to some extent.

Combining embodiments 1 to 5, 6, and table 1, it can be seen that when the thickness of the composite active material layer is too high, the effect of combining the low-swelling binder with the high-swelling binder and/or the acrylic acid derivative multi-component copolymer on improving the kinetic performance, cycle performance, and high-temperature storage performance of lithium batteries is slightly weakened. This is because, when the composite active material layer is thicker, the amount of high-swelling binder in the second active material layer is also greater, and the thickness of the second active material layer is also greater, which is more likely to lead to a larger swelling of the second active material layer during cycling.

Combining embodiments 1, 7 to 8, and table 1, it can be seen that when the ratio of the thickness of the first active material layer to the thickness of the second active material layer is too large, the total content of the low-swelling binder used in the first active material layer is higher than that of the low-swelling binder in the low-swelling binder used in embodiment 1. At this time, the rate discharge capacity retention of the lithium batteries decreases, but the high-temperature storage performance is slightly improved. On the contrary, when the ratio of the thickness of the first active material layer to the thickness of the second active material layer is too small, the total content of the high-swelling binder used in the second active material layer is higher than that of the high-swelling binder used in embodiment 1, and the rate discharge capacity retention of the lithium batteries is slightly improved, but the high-temperature storage performance shows a downward trend.

Combining embodiments 1, 9 to 10, and table 1, it can be seen that when the content of the first binder in the composite active material layer is 1% higher than the content of the second binder in the composite active material layer, the problem of floating up of the first binder during the molding process cannot be effectively alleviated, which will affect the adhesion between the first active material layer and the current collector interface, thereby reducing the circle performance of the lithium batteries. When the content of the first binder in the composite active material layer is 60% higher than the content of the second binder in the composite active material layer, the content of the high-swelling binder in the second active material layer is relatively low, which is not conducive to the infiltration of the electrolyte into the composite active material layer, and is not conducive to the conduction of electrons and ions, which will affect the kinetic performance of the lithium batteries.

**Claims**

1. A negative electrode plate comprising a current collector and a composite active material layer disposed on at least one surface of the current collector, the composite active material layer comprising a first active material layer and a second active material layer disposed sequentially on a surface of the current collector; the second active material layer being disposed on a surface of the first active material layer away from the current collector;

   the first active material layer comprising a first binder, the first binder comprising a low-swelling binder, the low-swelling binder comprising a low-swelling styrene-butadiene binder, and a monomer composition of the low-swelling styrene-butadiene binder comprising at least one of butadiene and styrene;
   a mass ratio of the first binder in the first active material layer ranging from 1% to 3%;
   the second active material layer comprising a second binder, the second binder comprising at least one of a high-swelling binder, an acrylic acid derivative multi-component copolymer; the high-swelling binder comprising at least one of a high-swelling styrene-butadiene binder, a high-swelling styrene-acrylic binder; a monomer composition of the high-swelling styrene-butadiene binder comprising at least one of butadiene and styrene; the monomer composition of the high-swelling styrene-acrylic binder comprising at least one of styrene and acrylate; and the monomer composition of the acrylic acid derivative multi-component copolymer comprising at least one of acrylic acid, acrylate salt, acrylic ester, and acrylonitrile; and
   a mass ratio of the second binder in the second active material layer ranging from 0.8% to 2%.
   wherein, the low-swelling binder having a volume swelling ratio ranging from 25% to 40%, and the high-swelling binder having a volume swelling ratio ranging from 60% to 85%.

2. The negative electrode plate according to claim 1, wherein, the low-swelling styrene-butadiene binder comprises a low-swelling styrene-butadiene rubber; the high-swelling styrene-butadiene binder comprises a high-swelling styrene-butadiene rubber; the high-swelling styrene-acrylic binder comprises a high-swelling styrene-acrylic rubber; and the acrylate salt comprises at least one of sodium acrylate and lithium acrylate.

3. The negative electrode plate according to claim 1, wherein when the second binder comprises both the high-swelling binder and the acrylic acid derivative multi-component copolymer, a mass ratio of the high-swelling binder to the acrylic acid derivative multi-component copolymer is 1: (1.5 to 2.5).

4. The negative electrode plate according to claim 1, wherein the composite active material layer has a thickness ranging from 100 μm to 300 μm.

5. The negative electrode plate according to claim 1, wherein a ratio of a thickness of the first active material layer to a thickness of the second active material layer is (1 to 1.5): 1.

6. The negative electrode plate according to claim 1, wherein the first active material layer further comprises a first active material, the first active material comprises at least one of graphite and silicon-containing graphite; the second active material layer further comprises a second active material, the second active material comprises at least one of graphite and silicon-containing graphite.

7. A method for preparing the negative electrode plate according to claim 1, comprising:

S1: mixing a first conductive agent, a first dispersant, a first active material, the first binder and a first solvent to obtain a mixture, and stirring the mixture to obtain a first active slurry; mixing a second conductive agent, a second dispersant, a second active material, the second binder and a second solvent to obtain a mixture, and stirring the mixture to obtain a second active slurry; and
coating the first active slurry and the second active slurry on at least one surface of the current collector, wherein the first active slurry is coated on the least one surface of the current collector, dried and cold-pressed to obtain a negative electrode plate.

8. The method according to claim 7, wherein t1 represents a mass of the first active slurry, t2 represents a mass of the second active slurry, m1 represents a mass of the first binder, m2 represents a mass of the second binder, and the first binder and the second binder satisfy a formula as follows: $m1/(t1+t2) > m2/(t1+t2)$.

9. The method according to claim 8, wherein m1 represents the mass of the first binder, and m2 represents the mass of the second binder, m1 and m2 satisfy a formula as follows: $5\% \leq (m1-m2)/m2 \times 100\% \leq 50\%$.

10. A lithium-ion battery comprising a positive electrode plate, a separator, an electrolyte, and the negative electrode plate according to any one of claims 1 to 6.

FIG. 1

FIG. 2

## INTERNATIONAL SEARCH REPORT

| International application No. |
| --- |
| **PCT/CN2024/136031** |

**A. CLASSIFICATION OF SUBJECT MATTER**

H01M 4/62(2006.01)i; H01M 4/13(2010.01)i; H01M 10/0525(2010.01)i

According to International Patent Classification (IPC) or to both national classification and IPC

**B. FIELDS SEARCHED**

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 负极, 活性层, 活性物质层, 粘结剂, 粘接剂, 黏合剂, 溶胀率, negative, cathode, anode, active layer, active material layer, adhesive, binder, swelling ratio

**C. DOCUMENTS CONSIDERED TO BE RELEVANT**

| Category* | Citation of document, with indication, where appropriate, of the relevant passages | Relevant to claim No. |
| --- | --- | --- |
| PX | CN 118472245 A (EVE ENERGY CO., LTD.) 09 August 2024 (2024-08-09) claims 1-10, and description, paragraphs 60-123 | 1-10 |
| X | CN 117497700 A (XIAMEN HITHIUM ENERGY STORAGE TECHNOLOGY CO., LTD.) 02 February 2024 (2024-02-02) description, paragraphs 3-30 and 45-109 | 1-10 |
| A | CN 114914393 A (ZHUHAI COSMX BATTERY CO., LTD.) 16 August 2022 (2022-08-16) entire document | 1-10 |
| A | CN 112563453 A (ZHUHAI COSMX BATTERY CO., LTD.) 26 March 2021 (2021-03-26) entire document | 1-10 |
| A | CN 115566136 A (LISHEN (QINGDAO) NEW ENERGY CO., LTD.) 03 January 2023 (2023-01-03) entire document | 1-10 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **24 February 2025** | **03 March 2025** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/136031**

| Patent document cited in search report | | | Publication date (day/month/year) | Patent family member(s) | | | Publication date (day/month/year) |
|---|---|---|---|---|---|---|---|
| CN | 118472245 | A | 09 August 2024 | None | | | |
| CN | 117497700 | A | 02 February 2024 | None | | | |
| CN | 114914393 | A | 16 August 2022 | CN | 114914393 | B | 13 August 2024 |
| CN | 112563453 | A | 26 March 2021 | WO | 2022121863 | A1 | 16 June 2022 |
| | | | | US | 2023129049 | A1 | 27 April 2023 |
| CN | 115566136 | A | 03 January 2023 | None | | | |

Form PCT/ISA/210 (patent family annex) (July 2022)

**EP 4 760 822 A1**

## REFERENCES CITED IN THE DESCRIPTION

**Patent documents cited in the description**

- CN 2024104311639